Europäisches Patentamt

European Patent Office

Office européen des brevets

(11) Publication number: **0 039 241**
**B1**

(12) **EUROPEAN PATENT SPECIFICATION**

(45) Date of publication of patent specification: **14.08.85**

(21) Application number: **81301881.9**

(22) Date of filing: **28.04.81**

(51) Int. Cl.⁴: **C 05 B 11/06**

(54) Method and apparatus for producing nitrophosphate fertilizers.

(30) Priority: **28.04.80 ZA 802539**

(43) Date of publication of application:
**04.11.81 Bulletin 81/44**

(45) Publication of the grant of the patent:
**14.08.85 Bulletin 85/33**

(84) Designated Contracting States:
**AT BE CH DE FR GB IT LI NL SE**

(56) References cited:
**AT-A- 343 152**
**BE-A- 526 307**
**FR-A- 925 332**
**FR-A-1 414 268**
**FR-A-1 448 797**
**GB-A- 357 473**
**GB-A-1 102 848**
**US-A-3 177 063**

(73) Proprietor: **Omnia Fertilizer Limited**
**6th Floor, Omnia Centre Cnr. Frederick & Von**
**Brandis Streets**
**Johannesburg Transvaal (ZA)**

(72) Inventor: **Van Schalkwyk, Pierre Lafras**
**Eugene Houndry Street Northern Industries**
**Sasolburg Transvaal (ZA)**

(74) Representative: **Brown, John David et al**
**FORRESTER & BOEHMERT Widenmayerstrasse**
**4/I**
**D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

### Field of the invention

This invention relates to a method of producing nitrophosphate fertilizers, and to apparatus for use in the production of nitrophosphate fertilizers.

### Background of the invention

In phosphate based fertilizers, the solubility of the phosphate compounds is of particular concern because this represents the availability of the phosphorus to the plants. Phosphate bearing rock from which most phosphate based fertilizer is produced contains essentially tricalcium phosphate $(Ca_3(PO_4)_2)$ which is quite insoluble in water or acid soils. However, monocalcium phosphate $(Ca(H_2PO_4)_2)$ and dicalcium phosphate $(CAHPO_4)$ are soluble in water and in acids such as citric acid. In order to convert the tricalcium phosphate in the phosphate bearing rock into mono- and dicalcium phosphates, the rock is generally treated with sulphuric acid. Depending on the ratio of acid to rock, varying proportions of mono- and dicalcium phosphate are produced along with various inert solid materials such as gypsum $(CaSO_4)$. The water and acid soluble salts may then be treated with ammonia to produce ammonium phosphates such as mono-ammonium phosphate (MAP) $(NH_4H_2PO_4)$ and diammonium phosphate $(DAP)(NH_4)_2HPO_4)$ which form the basic raw material for fertilizers.

In an alternative method, the phosphate bearing rock may be treated with nitric acid to yield a mixture of calcium nitrate, phosphoric acid and monocalcium phosphate as well as inert solid compounds. Ammoniation of this mixture produces a mixture of ammonium phosphate, dicalcium phosphate and ammonium nitrate which is termed generally nitrophosphates.

Although treatment with nitric acid has certain advantages over treatment with sulphuric acid, there are various problems associated with this process. For example, the nitrophosphate feedstocks have high moisture contents and give rise to high recycle ratios in the plant.

French Patent Specification No. 1,448,797 describes a process for the production of nitrophosphate fertilizers wherein a phosphate bearing rock is treated with nitric acid to form a slurry and the slurry is then ammoniated until it has a pH of just greater than 4.5. Sulphuric acid is then added to the ammoniated slurry until the pH thereof is between 2 and 3, and the ammoniation is then continued.

U.S. Patent Specification No. 3,177,063 describes a process similar to that described in French Patent Specification No. 1,448,797, except that, instead of the carefully controlled addition of sulphuric acid, specific metal ions are added to the reaction mixture to inhibit reversion of the phosphate compounds formed. Sulphuric acid is also added, for example together with the nitric acid during slurry formation.

Austrian Patent Specification No. 343,152 describes a process which is similar to those discussed above, except that reversion of phosphate compounds is inhibited by the addition of phosphoric acid to the slurry during ammoniation. Sulphuric acid may also be added. Neutralisation of the slurry is effected in two carefully controlled stages with external cooling. As a result, the water content of the product is relatively high.

According to the invention there is provided a method of producing a low-grade nitrophosphate fertilizer by treating a phosphate-bearing rock with nitric acid to form an acidic slurry containing nitrogen compounds including calcium nitrate and soluble phosphate compounds, feeding the slurry directly to a mixing chamber (11) without removal of the calcium nitrate, ammoniating the slurry in the mixing chamber with an ammoniating agent to form the fertilizer and adding sulphuric acid into the mixing chamber during the ammoniation step, characterized in that the slurry is fed to a reactor comprising the mixing chamber having inlets for the slurry, the ammoniating agent and the sulphuric acid, and a nozzle pipe, the ammoniating agent and the sulphuric acid are added into the mixing chamber through the inlets, the amount of sulphuric acid added being sufficient to inhibit reversion of the soluble phosphate compounds into insoluble phosphate compounds, the heat evolved in the ammoniation reaction is used to evaporate moisture present to form particles or a melt of fertilizer and steam and the fertilizer and steam exit the mixing chamber through the nozzle pipe.

During the ammoniation step an amount of phosphoric acid may be added into the mixing chamber to adjust the N:P (nitrogen:phosphorus) ratio of the final product and to stabilize the nitrophosphates formed. In particular the phosphoric acid prevents decomposition of the ammonium nitrate formed. The amount of phosphoric acid added will depend on the desired fertilizer formulation.

The temperature during the ammoniation reaction is approximately 130°C and can be as high as 170°C. However the temperature should be controlled so that it does not reach a level at which the nitrophosphates would decompose. Water may be added into the mixing chamber during the ammoniation step to control the temperature.

The ratio of nitric acid to rock used is important and depending on the type of phosphate rock used, would be in the order of 2:1 by mass. Generally a 60% nitric acid solution is used.

The ammoniating agent is preferably ammonia.

The slurry is fed directly into the mixing chamber in order to conserve the heat evolved in the acidification step. The reaction between the nitric acid and the rock is an exothermic reaction and the temperature of the slurry will rise to 60—70°C. The heat of reaction is useful in the next step to evaporate off the liquid present.

The method may be carried out batchwise but preferably it is carried out continuously, i.e. with continuous feed of the slurry into the mixing chamber.

The ammoniating agent, sulphuric acid and phosphoric acid are preferably fed into the mixing chamber through a sparger.

The invention also provides the use of an apparatus which comprises a tank reactor (2) including an inlet (1.5) for the phosphate-bearing rock and the nitric acid and a further reactor connected directly to the tank reactor, the further reactor comprising a mixing chamber (11) including an inlet (33) for the slurry, an inlet (32) for the ammoniating agent, an inlet (31) for water and an inlet (38) for the sulphuric acid, and a nozzle pipe (30) connected to the mixing chamber (11), along which the fertilizer passes to an outlet (36).

The nozzle-pipe may discharge into a spray drying chamber. Alternatively, the nozzle pipe may discharge into a granulator.

Brief description of the drawings

The invention will now be further described, by way of example, with reference to the accompanying drawings, in which:

Figure 1 is a diagram showing apparatus used for the production of nitrophosphate fertilizers according to the invention;

Figure 2 shows a mixing chamber according to the invention, for use in the apparatus of Figure 1; and

Figure 3 is an end view of the mixing chamber of Figure 2.

Detailed description of preferred embodiments

Raw phosphate rock is fed along a conduit 1 into a stirred tank reactor 2. 60% nitric acid is stored in a tank 3 and is fed by a pump 4 along a pipe 5 into the reactor 2. The nitric acid will be at about 30°C and under a pressure of 15kPa. The nitric acid and rock are stirred by a stirrer 6 and react to form a mixture of nitrogen compounds, water and citric acid soluble phosphate compounds and inert solid materials such as gypsum. Approximately 20 minutes retention time in the reactor is sufficient to convert substantially all the phosphates into a water soluble form. The reaction is exothermic and under adiabatic conditions the temperature will rise to 60—70°C. Some nitrous fumes will be evolved during the reaction. These fumes are extracted and scrubbed by means not shown.

The acidic slurry is pumped by a pump 7 along pipes 8, 9 to a pipe reactor with a mixing chamber indicated schematically at 11. The slurry passes to the mixing chamber at a temperature of approximately 60°C and a pressure of 750 kPa.

Ammonia is fed into the mixing chamber along pipes 12 and 13. The ammonia will be at a pressure of approximately 900 kPa. The ammoniation reaction occurs at a pressure of approximately 600 kPa and at a temperature of approximately 130°C. Water may be introduced into the mixing chamber along pipes 16 and 17 to control the temperature in the mixing chamber.

The neutralization reaction between the ammonia and the acidic slurry is virtually instantaneous and the heat evolved evaporates the water introduced.

The sulphuric acid is added directly into the mixing chamber along pipes 18 and 19. Normally, when the acidic slurry is ammoniated and dried the soluble phosphates will revert into insoluble phosphates. This reaction is inhibited by the addition of a small amount of sulphuric acid, in the order of 5%.

Phosphoric acid can optionally be added directly into the reactor 2 but again it is preferred to add it along pipes 20 and 21 directly into the mixing chamber. The phosphoric acid is added to adjust the N:P ratio of the final product in order to optimise the downstream formulation of complex fertilizers. The phosphoric acid is equally desirable to stabilize the process and to prevent decomposition of ammonium nitrate formed in the mixing chamber. The amount of phosphoric acid added will depend on the final desired fertilizer formulation.

The mixing chamber 11 discharges into a spray drying chamber 22 where the steam is flashed off and the solid product particles are dried and cooled by a current of air. The exhaust fumes are extracted by an extractor 23 and passed to a scrubbing plant (not shown). The dry powdery product which collects at the bottom of the chamber at a temperature of approximately 35°C and with a moisture content of about 5% can then be used as a dry feed material in a NPK granulation plant.

The dry powder product can be considered to be a mixture of monoammonium phosphate, ammonium nitrate, ammonium sulphate and some calcium phosphate. The overall process conversion of phosphate bearing rock to water soluble phosphate is in the order of 78% and the overall conversion to citric acid soluble phosphates is in the order of 97%.

Alternatively the product from the mixing chamber 11 can be obtained as a melt and introduced directly into a drum granulator (not shown) to produce granular NPK fertilizers.

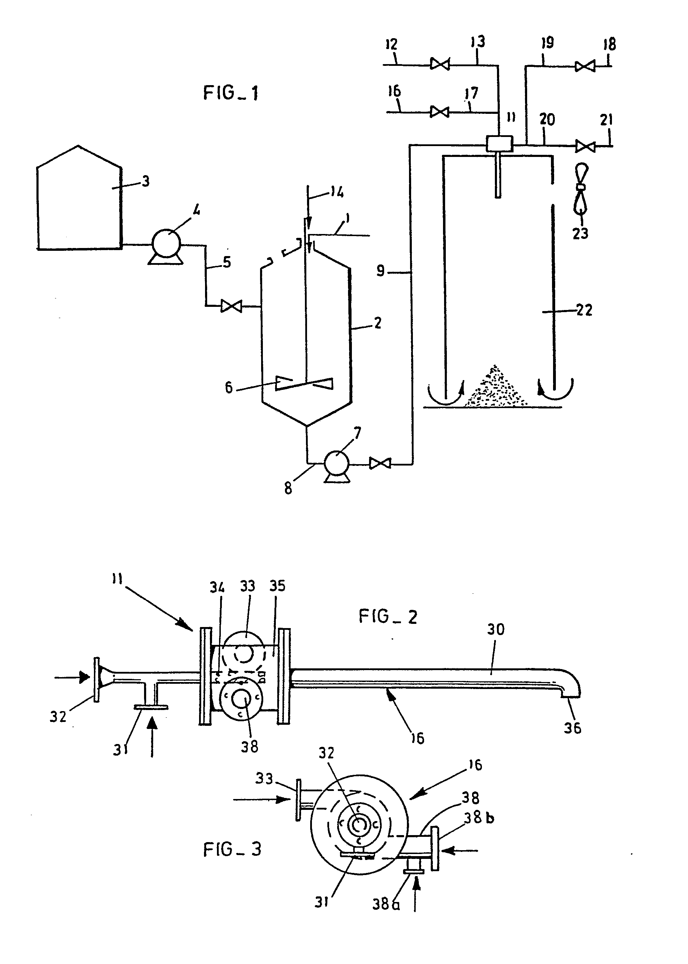

The pipe reactor with the mixing chamber 11 is shown in Figures 2 and 3. A nozzle pipe 30 extends either into a drum granulator or into a spray drying tower. There are four inlets 31, 32 and 33, 38 to the nozzle. The acidic slurry enters through one tangential inlet 33, ammonia is introduced via inlet 32, water is introduced through inlet 31, sulphuric acid through the pipe 38a and phosphoric acid through pipe 38b to the second tangential inlet 38. The inlets 31 and 32 lead to a sparger section 34 which has a number of outlets into an auxiliary chamber 35 to which the tantential inlets 33 and 38 are connected. Mixing takes place in this auxiliary chamber 35 and in the nozzle 30 and the mixture then exits via outlet 36. The mixing occurs at a pressure of approximately 600 kPa and at a temperature of approximately 130°C. A considerable amount of moisture evaporates from the mixture leaving the outlet 36, and the mixing chamber and nozzle can be designed and operated in such a way as to produce either a powder or a melt. The remainder of the moisture is driven off either in the spray drying tower or in the drum granulator.

**Claims**

1. A method of producing a low-grade nitrophosphate fertilizer by treating a phosphate-bearing rock with nitric acid to form an acidic slurry containing nitrogen compounds including calcium nitrate and soluble phosphate compounds, feeding the slurry directly to a mixing chamber (11) without removal of the calcium nitrate, ammoniating the slurry in the mixing chamber with an ammoniating agent to form the fertilizer and adding sulphuric acid into the mixing chamber during the ammoniation step, characterised in that the slurry is fed to a reactor comprising the mixing chamber having inlets for the slurry, the ammoniating agent and the sulphuric acid, and a nozzle pipe, the ammoniating agent and the sulphuric acid are added into the mixing chamber through the inlets, the amount of sulphuric acid added being sufficient to inhibit reversion of the soluble phosphate compounds into insoluble phosphate compounds, the heat evolved in the ammoniation reaction is used to evaporate moisture present to form particles or a melt of fertilizer and steam and the fertilizer and steam exit the mixing chamber through the nozzle pipe.

2. A method according to claim 1 characterised in that during the ammoniation step an amount of phosphoric acid is added (via 20, 21) into the mixing chamber (11) to adjust the N:P ratio of the final product and to stabilise the nitrophosphates formed.

3. A method according to claim 1 or claim 2 characterised in that water (via 16, 17) is added into the mixing chamber (11) during the ammoniation step to control the temperature in the mixing chamber.

4. A method according to any one of the preceding claims characterised in that the ratio of nitric acid to phosphate bearing rock is approximately 2:1 by mass.

5. A method according to any one of the preceding claims characterised in that an approximately 60% solution of nitric acid is used.

6. A method according to any one of the preceding claims characterised in that the ammoniating agent is ammonia.

7. A method according to any one of the preceding claims characterised in that the slurry is fed continuously to the mixing chamber (11).

8. The use in a method according to any one of Claims 1 to 7 of an apparatus which comprises a tank reactor (2) including an inlet (1, 5) for the phosphate-bearing rock and the nitric acid and a further reactor connected directly to the tank reactor, the further reactor comprising a mixing chamber (11) including an inlet (33) for the slurry, an inlet (32) for the ammoniating agent, an inlet (31) for water and an inlet (38) for the sulphuric acid, and a nozzle pipe (30) connected to the mixing chamber (11), along which the fertilizer passes to an outlet (36).

9. A use according to Claim 8, wherein the mixing chamber (11) includes a sparger (34) forming an inlet for an ammoniating agent.

**Patentansprüche**

1. Verfahren zur Herstellung eines niedriggradigen Nitrophosphatdüngemittels durch Behandeln eines phosphathaltigen Gesteins mit Salpetersäure zur Bildung einer sauren Trübe, die Nitrogenverbindungen enthält, einschließlich salpetersaurem Kalk und lösbaren Phosphatverbindungen, Einführen der Trübe unmittelbar in eine Mischkammer (11) ohne eine Entfernung des saltpetersauren Kalks, Ammonsieren der Mischung in der Mischkammer mit einem Ammonisierungsmittel zur Bildung des Düngemittels und Hinzugeben von Schwefelsäure in die Mischkammer während des Ammonisierungsschrittes, dadurch gekennzeichnet, daß die Trübe in einen Reaktor eingeführt wird, der eine Mischkammer aufweist, die Einlässe für die Mischung, das Ammonisierungsmittel und die Schwefelsäure besitzt, sowie ein Düsenrohr, daß das Ammonisierungsmittel und die Schwefelsäure durch die Einlässe in die Mischkammer hineingegeben werden, wobei der Betrag an Schwefelsäure, der zugegeben ist, ausreichend ist, eine Umkehrung der löslichen Phosphatverbindungen in nicht lösliche Phosphatverbindungen zu verhindern, daß die bei der Ammonisierungsreaktion freigesetzte Wärme dazu verwendet wird, die Feuchtigkeit zu verdampfen, die vorhanden ist, zur Bildung von Düngemittelteilchen oder einer Düngemittelschmelze und Dampf, und daß der Dünger und der Dampf aus der Mischkammer durch das Düsenrohr austritt.

2. Verfahren nach Anspruch 1, dadurch gekennzeichnet, daß während des Ammonisierungsschrittes ein Betrag an phosphoriger Säure hinzugegeben wird (durch 20, 21), in die Mischungkammer (11), um das N:P-Verhältnis des Endproduktes einzustallen und die gebildeten Nitrophosphate zu stabilisieren.

3. Verfahren nach Anspruch 1 oder 2, dadurch gekennzeichnet, daß Wasser (durch 16, 17) in die Mischkammer (11) hinzugegeben wird, während der Ammonisierungsstufe, zur Steuerung der Temperatur in der Mischkammer.

4. Verfahren nach einem der vorstehenden Ansprüche, dadurch gekennzeichnet, daß das Massenverhältnis von Salpetersäure zu phosphathaltigem Gestein ungefähr 2:1 ist.

5. Verfahren nach einem der vorstehenden Ansprüche, dadurch gekennzeichnet, daß ungefähr ein 60%ige Lösung von Salpetersäure verwendet wird.

6. Verfahren nach einem der vorstehenden Ansprüche, dadurch gekennzeichnet, daß das Ammonisierungsmittel Ammonium ist.

7. Verfahren nach einem der vorstehenden Ansprüche, dadurch gekennzeichnet, daß die Trübe kontinuierlich in die Mischkammer (11) eingeführt wird.

8. Verwendung eines Gerätes in einem Verfahren nach einem der Ansprüche 1 bis 7, das einen Tankreaktor (2) aufweist, der einen Einlaß (1, 5) für das phosphathaltige Gestein und die Salpetersäure aufweist, und weiter einen Reaktor, der unmittelbar mit dem Tankreaktor verbunden ist, wobei der weitere Reaktor eine Mischkammer (11) aufweist, die einen Einlaß (33) für die Trübe, einen Einlaß (32) für das Ammonisierungsmittel, einen Einlaß (31) für Wasser und einen Einlaß (38) für die Schwefelsäure besitzt, und eine Düsenrohr (30), das mit der Mischkammer (11) verbunden ist, entlang der das Düngemittel zu dem Auslaß (36) gelangt.

9. Verwendung nach Anspruch 8, wobei die Mischkammer (11) einen Aufgußapparat (34) besitzt, der an einem Einlaß für das Ammonisierungsmittel ausgebildet ist.

**Revendications**

1. Méthode de production d'un engrais à faible taux de nitrophosphate, dans laquelle on traite à l'acide nitrique une roche phosphatée pour former une boue acide contenant des composés azotés contenant du nitrate de calcium et des composés phosphatés solubles, et dans laquelle on introduit directement la boue dans une chambre de mélange (11) sans ôter le nitrate de calcium, on traite à l'ammoniac la boue dans la chambre de mélange avec un agent ammoniaquant pour former l'engrais et on ajoute de l'acide sulfurique dans la chambre de mélange pendant la phase de traitement à l'ammoniac, caractérisée en ce que la boue est introduite dans un réacteur comprenant une chambre de mélange munie d'entrées pour la boue, l'agent ammoniaquant et l'acide sulfurique, et un tuyau de sortie, l'agent ammoniaquant et l'acide sulfurique étant introduits par les entrées dans la chambre de mélange, la quantité d'acide sulfurique ajouté étant suffisant pour empêcher la transformation des composés phosphatés solubles en composés phosphatés insolubles, la chaleur produite par la traitement à l'ammoniac étant utilisée pour évaporer l'huimidité présente et former des particules ou une solution d'engrais et de vapeur, l'engrais et la vapeur quittant la chambre de mélange par le tuyau de sortie.

2. Méthode selon la revendication 1, caractérisée en ce que pendant l'étape de traitement à l'ammoniac une certain quantité d'acide phosphorique est introduite (via 20, 21) dans la chambre de mélange (11) pour ajuster le rapport N:P du produit final et stabiliser les nitrophosphates formés.

3. Méthode selon la revendication 1 ou la revendication 2, caractérisée en ce que de l'eau est introduite (via 16, 17) dans la chambre de mélange (11) pendant l'étape de traitement à l'ammoniac pour contrôler la température de la chambre de mélange.

4. Méthode selon l'une des revendications précédentes, caractérisée en ce que le rapport d'acide nitrique à la roche phosphatée est d'environ 2:1 en masse.

5. Méthode selon l'une des revendications précédentes, caractérisée en ce qu'on utilise une solution d'acide nitrique à 60% environ.

6. Méthode selon l'une des revendications précédentes, caractérisée en ce que l'agent ammoniaquant est de l'ammoniac.

7. Méthode selon l'une des revendications précédentes, caractérisée en ce que la boue est introduite dans la chambre de mélange de manière continue.

8. Appareil pour la mise en oeuvre de la méthode selon l'une des revendications 1 à 7, caractérisé en ce qu'il comprend un réservoir de réaction (2) comprenant des entrées (1, 5) pour la roche phosphatée et l'acide nitrique et un autre réacteur connecté directement au réservoir de réaction, ledit réacteur comprenant une chambre de mélange (11) comprenant une entrée (33) pour la boue, une entrée (32) pour l'agent ammoniaquant, une entrée (31) pour l'eau, une entrée (38) pour l'acide sulfurique et un tuyau de sortie (30) connecté à la chambre de mélange (11) que l'engrais travers jusqu'à une sortie (36).

9. Appareil selon la revendication 8, caractérisé en ce que la chambre de mélange (11) comprend un diffuseur (34) formant une entrée pour l'agent ammoniaquant.

0 039 241

FIG_1

FIG_2

FIG_3

1